Europäisches Patentamt

European Patent Office

Office européen des brevets

(11) Veröffentlichungsnummer: **0 304 674 B1**

(12) **EUROPÄISCHE PATENTSCHRIFT**

(45) Veröffentlichungstag der Patentschrift: **02.12.92**

(51) Int. Cl.⁵: **H04M 9/10**

(21) Anmeldenummer: **88112418.4**

(22) Anmeldetag: **30.07.88**

(54) Verfahren für die sprachgesteuerte Dämpfungsregelung in Fernsprechübertragungskreisen.

(30) Priorität: **22.08.87 DE 3728109**

(43) Veröffentlichungstag der Anmeldung:
**01.03.89 Patentblatt 89/09**

(45) Bekanntmachung des Hinweises auf die
Patenterteilung:
**02.12.92 Patentblatt 92/49**

(84) Benannte Vertragsstaaten:
**AT BE CH ES FR GB IT LI LU NL**

(56) Entgegenhaltungen:
**US-A- 3 699 271**
**US-A- 3 900 708**
**US-A- 4 571 461**
**US-A- 4 600 815**

**PATENT ABSTRACTS OF JAPAN, Band 11,**
**Nr. 190 (E-517)[2637], 18. Juni 1987, Seite 58**
**E 517; & JP-A-62 18 836**

(73) Patentinhaber: **TELENORMA GMBH**
**Mainzer Landstrasse 128-146**
**W-6000 Frankfurt/Main(DE)**

(72) Erfinder: **Petri, Udo, Dipl.-Ing.**
**Baumgartenstrasse 18**
**W-6204 Taunusstein 4(DE)**
Erfinder: **Hänsler, Eberhard, Prof. Dr.-Ing.**
**Erbacher Strasse 56D**
**W-6100 Darmstadt(DE)**
Erfinder: **Hätty, Birger, Dipl.-Ing.**
**Spessart Ring 73**
**W-6100 Darmstadt(DE)**

## Beschreibung

Die Erfindung betrifft ein Verfahren für die sprachgesteuerte Dämpfung in Fernsprechübertragungskreisen nach dem Oberbegriff des Patentanspruchs 1.

Aus der DE-A-35 28 973 ist eine Schaltungsanordnung für die sprachgesteuerte Dämpfung zweier Signalwege mit gegeneinander gerichteten Übertragungsrichtungen bekannt. Dabei sind in die Übertragungswege jeweils steuerbare Dämpfungsglieder eingeschleift. Es wird jeweils das Signal des einen Signalweges von einem steuerbaren Verstärker abgenommen und zur Steuerung der Dämpfung im anderen Signalweg benutzt. Damit wird erreicht, daß derjenige Übertragungsweg mit dem schwächeren Signal zusätzlich bedämpft und der Signalweg mit dem stärkeren Signal weniger gedämpft wird. Da derartige Regelvorgänge sich im Laufe einer doppeltgerichteten Verbindung, insbesondere Fernsprechverbindungen sich laufend ändern und neu einstellen müssen, kann es bei solchen Umsteuervorgängen dazu kommen, daß Sprachanteile verloren gehen. Um dies zu vermeiden, sind bei der in der DE-A-35 28 973 beschriebenen Schaltungsanordnung zusätzliche Verzögerungsschaltungen eingeschleift. Derartige Verzögerungsschaltungen haben jedoch eine nicht zu vernachlässigende Wirkung auf die Gesamtlaufzeit, so daß beispielsweise bei Übersee-Fernverbindungen Schwierigkeiten entstehen können, wenn durch die Art der Verbindung bedingt schon erhebliche Signallaufzeiten bestehen.

Aus der DE-Zeitschrift "Archiv für Elektronik und Übertragungstechnik", Band 39, (1985) Heft 2 ist ab Seite 123 ein Aufsatz abgedruckt mit dem Titel:
Zum Entwurf von Filtern für ideale QMF und Polyphasen-Filterbänke. Es handelt sich dabei um Verfahren, womit ein Tonfrequenzsignal durch eine Analyse-Filterbank in einzelne Frequenzbänder aufgeteilt werden kann. Mit einer nach gleichartigen Prinzipien funktionierenden Synthese-Filterbank kann aus den einzelnen Frequenzbändern das ursprüngliche Signal wieder rekunstruiert werden. Analyse-Polyphasen-Filterbänke können auch eingesetzt werden als Demultiplexer für im Frequenzmultiplex angebotene Signalkanäle, um die einzelnen in verschiedenen Frequenzbändern angebotenen Verbindungen zu selektieren. Außerdem lassen sich Polyphasen-Filterbänke einsetzen, wenn die Aufgabe besteht, Transmultiplexer einzusetzen, um im Frequenzmultiplex ankommende Signale in Zeitmultiplex umzusetzen oder in Zeitmultiplex angebotene Signale zu einem Frequenzmultiplex umzuformen.

Ein selektiver Echounterdrücker ist aus der Patentschrift US-A 39 00 708 bekannt. Die in einem Vierdraht-Übertragungssystem eingesetzte Anordnung teilt das Sprachfrequenzband in eine Vielzahl von Teilfrequenzbändern. In jedem Teilfrequenzband der Empfangsrichtung wird ein Echounterdrücker gesteuert von dem gesendeten Echsosignal in diesem Frequenzband. Die Zurücknahme der Dämpfung wird verzögert mit einer Zeit, die der Übertragungzeit eines Echos entspricht am Ende der Vierdraht-Verbindung.

Bei dieser Anordnung sind regelbare Dämpfungsglieder nur in einem Übertragungsweg vorgesehen. Außerdem ist es erforderlich, Zeitverzögerungen vorzusehen, so daß eine derartige Anordnung in ihrer Reaktionszeit eingeschränkt ist. Eine selektive Dämpfungsregelung in der anderen Übertragungsrichtung ist nicht vorgesehen. Dehalb könnte durchaus eine Beeinträchtigung der Sprachübertragung entstehen.

Die Aufgabe der vorliegenden Erfindung besteht darin, ein Verfahren anzugeben, womit bei der sprachgesteuerten Dämpfungsregelung in Fernsprechübertragungskreisen ein Regelverhalten erreicht wird, bei dem keine Beeinträchtigung der Sprachübertragung stattfindet. Dabei soll das Einfügen von Verzögerungsschaltungen vermieden werden, damit die durch das Verfahren verursachten Laufzeiten auf ein Minimum beschränkt werden.

Diese Aufgabe wird durch eine Merkmalskombination gelöst, wie sie im Patentanspruch 1 angegeben ist.

Damit wird in vorteilhafter Weise erreicht, daß schnelle Regelvorgänge stattfinden, wobei Informationsverluste vermieden werden. Durch die Aufteilung in Frequenzbänder ist es sogar in gewissem Umfang möglich, daß eine gleichzeitige Übertragung in beiden Richtungen stattfindet. Außerdem kann der Regelbereich der Dämpfungsglieder geringer ausgelegt werden, als bei bekannten anderen Verfahren, die über das gesamte Frequenzspektrum sich erstrecken.

Weiterbildungen der Erfindung ergeben sich aus den Unteransprüchen.

Ein Ausführungsbeispiel der Erfindung wird nachfolgend anhand von Zeichnungen näher erläutert. Es zeigt:

Fig. 1    das Blockschaltbild eines Fernsprechübertragungskreises, beispielsweise für eine Freisprecheinrichtung,

Fig. 2    das Blockschaltbild einer Steuereinrichtung für die sprachgesteuerte Dämpfungsregelung.

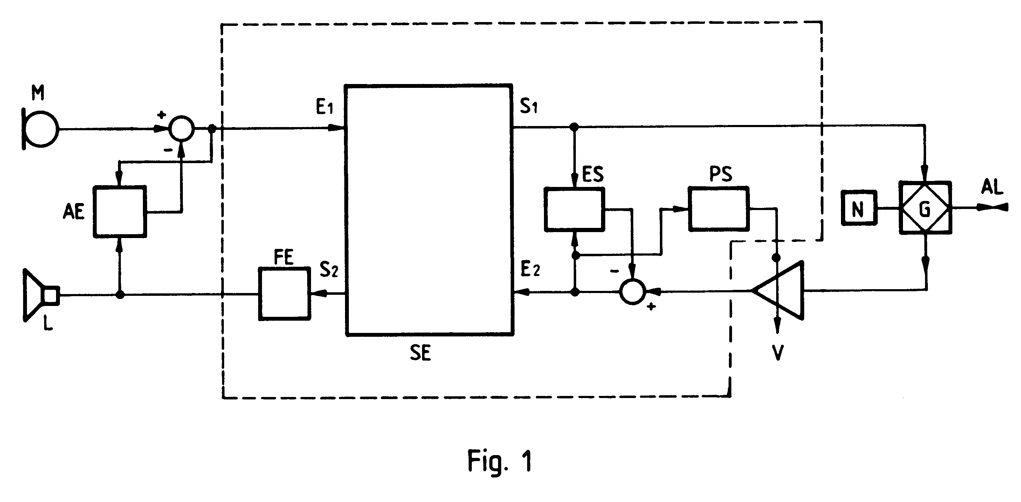

In der Fig. 1 ist dargestellt, wie ein Mikrofon M mit dem Eingang E1 einer Steuereinrichtung SE verbunden ist. Der zugehörige Ausgang S1 dieser Steuereinrichtung SE ist mit dem Sendeeingang einer Gabel G verbunden. An die Gabel G ist in bekannter Weise eine Nachbildung N der Anschlußleitung AL angeschlossen. Damit gelangt das innerhalb der gesamten Einrichtung richtungsgebundene Signal auf die doppeltgerichtete Anschlußleitung AL.

Die von der Anschlußleitung AL kommenden Empfangssignale gelangen über einen regelbaren Verstärker V zum Eingang E2 der Steuereinrichtung. Zur Steuerung des regelbaren Verstärkers V kann ein Pegelsteller PS vorgesehen werden, so daß bei zu schwachem Empfangspegel die Verstärkung entsprechend nachgeregelt wird. Um eine Fehlanpassung der Gabel G und/oder Anschlußleitung AL zu kompensieren, ist eine Echounterdrückungsschaltung ES zwischen die beiden Übertragungsrichtungen geschaltet. Durch eine gestrichelte Umrandung ist angedeutet, daß die Echounterdrückungsschaltung ES und der Pegelsteller PS mit in die Steuereinrichtung SE einbezogen sein können. Dem Empfangseingang E2 zugeordnet ist ein Sendeausgang S2, der das zur Wiedergabe, beispielsweise durch einen Lautsprecher L, bestimmte Signal ausgibt. In diesen Stromkreis kann eine Frequenzversatzeinrichtung FE eingeschleift sein, die ebenfalls innerhalb der Steuereinrichtung SE verwirklicht sein kann.

Zusätzlich kann noch zwischen Mikrofon M und Lautsprecher L eine Einrichtung AE zur Unterdrückung kurzer akustischer Echos (Direktschall vorgesehen werden, die speziell auf die konstruktiven Gegebenheiten und die Umgebung der Einrichtung abgestimmt werden kann.

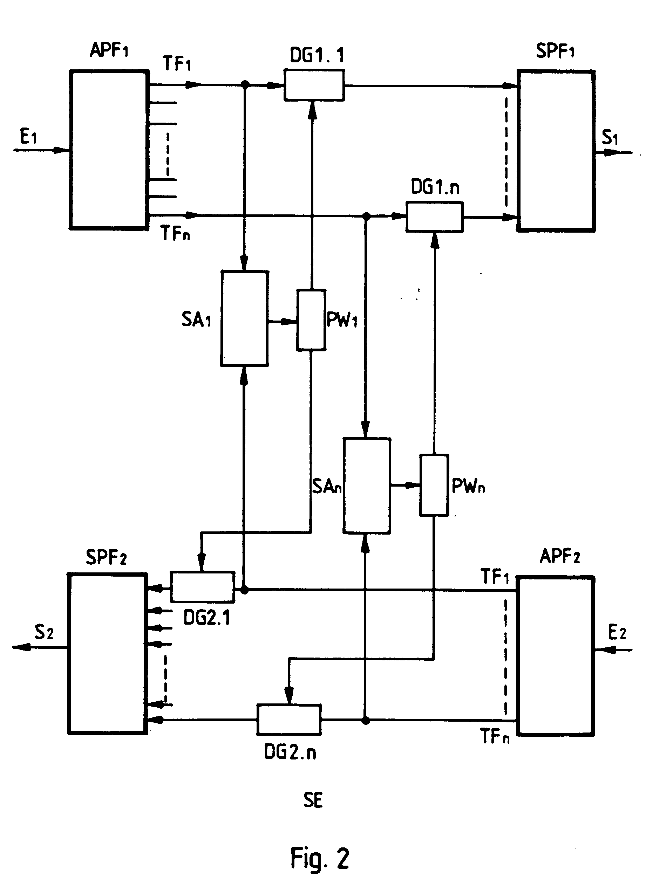

Die Fig. 2 zeigt ein Blockschaltbild zur Erläuterung des im Patentanspruch 1 angegebenen Verfahrens. Das vom Mikrofon M kommende Tonfrequenzsignal wird am Eingang E1 einer Analyse-Polyphasen-Filterbank APF1 angeboten. Dort wird es in einzelne Teilfrequenzbänder TF1 bis TFn zerlegt. Für jedes einzelne Teilfrequenzband TF ist ein eigener Weg zu einer nach dem gleichen Prinzip arbeitenden Synthese-Polyphasen-Filterbank SPF1 vorgesehen. In jeden einzelnen dieser Wege ist ein steuerbares Dämpfungsglied DG1.1 bis DG1.n eingeschleift.

Die gleiche Anordnung von Analyse-Polyphasen-Filterbank APF2 und Synthese-Polyphasen-Filterbank SPF2 ist für die Empfangsrichtung vorgesehen, wobei mit dem am Eingang E2 empfangenen Signal genau so verfahren wird, wie dies zuvor für die Senderichtung beschrieben worden ist. Die Teilfrequenzbänder TF1 bis TFn sind absichtlich gleichartig bezeichnet, weil es sich jeweils um die gleichen Frequenzbereiche handelt. Auch hier sind für jedes einzelne Teilfrequenzband TF gleichartige regelbare Dämpfungsglieder DG2.1 bis DG2.n vorgesehen. Das durch die Synthese-Polyphasen-Filterbank SPF2 wieder zusammengesetzte Signal wird am Sendeausgang S2 der Steuereinrichtung abgegeben. Für jedes einzelne Teilfrequenzband TF1 bis TFn ist eine zugeordnete Sprachauswertelogik SA 1 bis SA n vorgesehen. Durch Vergleich der jeweiligen Abweichungen von einem vorgegebenen Ruhepegel wird festgestellt, ob entweder in Senderichtung oder in Empfangsrichtung eine größere Sprachaktivität vorliegt. Dementsprechend wird die jeweils zugehörige Pegelwaage PW1 bis PWn so eingestellt, daß das der weniger aktiven Übertragungsrichtung zugeordnete Dämpfungsglied, z.B. DG1.1 eine größere Dämpfung erhält. Wenn durch die in einem normalen Telefongespräch entstehenden Sprechpausen des einen Teilnehmers die Sprachaktivität wechselt, so werden die entsprechenden Pegelwagen PW1 bis PWn in jeweils gegensinniger Richtung eingestellt und somit die zugehörigen Dämpfungsglieder DG gesteuert. Diese Maßnahmen werden für jedes einzelne Teilfrequenzband TF1 bis TFn getrennt und unabhängig voneinander durchgeführt. Somit ist es in gewissen Grenzen sogar möglich, daß gleichzeitig in beiden Richtungen gesendet und empfangen werden kann. Dies läßt sich dadurch erklären, daß bei gleichzeitigem Sprechen entsprechend der Stimmlage der beiden Teilnehmer in manchen Frequenzbändern die Senderichtung aktiver sein kann und in anderen Frequenzbändern die Empfangsrichtung aktiver sein kann.

Damit dieser Effekt nicht zu unerwünschten Rückkopplungseffekten führt, ist in der Steuereinrichtung SE in nicht dargestellter Weise vorgesehen, daß durch Abtastung der Einstellungen der Pegelwaagen festgestellt wird, in welcher Übertragungsrichtung mehr Teilfrequenzbänder TF1 bis TFn sprachaktiv sind. Das Ergebnis dieser Feststellung führt dazu, daß die Dämpfungsglieder, beispielsweise DG2.1 bis DG2.n der insgesamt weniger aktiven Übertragungsrichtung dann mit einem höheren Dämpfungswert beaufschlagt werden.

Es ist außerdem innerhalb der Steuereinrichtung vorgesehen, daß für jedes einzelne Teilfrequenzband TF1 bis TFn in Sprechpausen der Ruhepegel neu ermittelt wird, damit für das erneut ankommende Sprachsignal ein akuteller Vergleichswert zur Verfügung steht. Die auf digitaler Basis arbeitende Steuereinrichtung SE stellt sich immer automatisch auf die jeweiligen Gegebenheiten beider Übertragungswege ein. Es wird dadurch ein optimales Übertragungsverhalten erreicht.

## Patentansprüche

1. Verfahren für die sprachgesteuerte Dämpfungsregelung in Fernsprechübertragungskreisen, insbesondere für Freisprecheinrichtungen, wobei das Sprachfrequenzband in mehrere Teilfrequenzbänder zerlegt wird und in jedem Frequenzband in Abhängigkeit von dem Signal einer Übertragungsrichtung das Signal der Gegenrichtung beeinflußt wird, indem jeweils pro Frequenzband in den anderen Signalweg eingeschleifte einstellbare Dämpfungsglieder durch Steuersignale veranlaßt werden, ihren Dämpfungswert zu ändern, und wobei die Teilfrequenzbänder nach der Dämpfungsregelung wieder zusammengefügt werden,
dadurch gekennzeicht,
daß die Teilfrequenzbänder (TF1 bis TFn) durch jeweils eine pro Übertragungsrichtung (E1-S1, E2-S2) vorgesehene Analyse-Filterbank (APF1, APF2) gebildet werden,
daß in jeder Übertragungsrichtung (E1-S1, E2-S2) für jedes Teilfrequenzband (TF1 bis TFn) eigene Dämpfungsglieder (DG 1.1 bis DG 1.n, DG 2.1 bis DG 2.n) vorgesehen sind, die jeweils von einer durch eine zugeordnete Sprachauswertelogik (SA1 bis SAn) gesteuerte Pegelwaage (PW1 bis PWn) ihre Einstellbefehle so erhalten, daß das der im jeweiligen Teilfrequenzband (TF1 bis TFn) weniger aktiven Übertragungsrichtung zugeordnete Dämpfungsglied (DG) eine größere Dämpfung erhält,
daß pro Übertragungsrichtung (E1 - S1, E2 - S2) je eine Synthese-Filterbank (SPF1, SPF2) vorgesehen ist, mit welcher die einzelnen Teilfrequenzbänder (TF1 - TFn) wieder zu einem gesamten Sprachfrequenzband zusammengefügt werden, das jeweils an den Sendeausgängen (S1, S2) erscheint,
daß in den Sprachpausen das Ruhegeräusch durch eine Schätzung der Störleistung jeweils neu ermittelt wird,
und daß dieses Ergebnis für den nächsten Sprachabschnitt zur Pegelbewertung verwendet wird.

2. Verfahren nach Anspruch 1,
dadurch gekennzeichnet,
daß für die Einstellung der Pegelwaagen (PW1 bis PWn) die Aktivität beider Übertragungsrichtungen zusätzlich ermittelt wird, indem festgestellt wird, in welcher Übertragungsrichtung mehr sprachaktive Teilfrequenzbänder (TF1 bis TFn) vorliegen, und daß in Abhängigkeit davon die Dämpfung der jeweils anderen Übertragungsrichtung insgesamt also in allen Teilbändern erhöht wird.

3. Verfahren nach Anspruch 1,
dadurch gekennzeichnet,
daß die der Feststellung der Sprachaktivität einzelner oder mehrerer Teilfrequenzbänder (TF1 bis TFn) ein zusätzlicher Einfluß auf eines oder mehrere der Teilfrequenzbänder (TF1 bis TFn) der anderen Übertragungsrichtung ausgeübt wird, indem die Einstellung der Dämpfungsglieder (DG) variiert wird, um Sprachverständlichkeit und Stabilität zu erhöhen.

4. Verfahren nach Anspruch 1,
dadurch gekennzeichnet,
daß als Steuereinrichtung (SE) ein integrierter Signalprozessor verwendet wird, worin die Funktionen der Dämpfungsglieder (DG), der Pegelwaagen (PW), der Sprachauswertelogik (SAL) un der Filterbanken (APF,SPF) auf digitaler Basis realisiert wird.

5. Verfahren nach Anspruch 1,
dadurch gekennzeichnet,
daß zwischen die beiden Übertragungsrichtungen eine Echounterdrückungsschaltung (ES) geschaltet ist, um eine Fehlanpassung von Gabel und/oder Leitung zu kompensieren.

6. Verfahren nach Anspruch 1,
dadurch gekennzeichnet,
daß zusätzlich für eine Pegelanpassung ein einstellbarer Verstärker (V) vorgeshen ist, der von einem Pegelsteller (PS) gesteuert wird.

7. Verfahren nach einem der Ansprüche 5 oder 6,
dadurch gekennzeichnet,
daß die Echounterdrückungsschaltung (ES) und der Pegelsteller (PS) zusätzlich in der Steuereinrichtung (SE) realisiert sind.

8. Verfahren nach Anspruch 1,
dadurch gekennzeichnet,
daß innerhalb der Steuereinrichtung (SE) zusätzlich in der Empfangsrichtung eine Fre-quenzversatzeinrichtung (FE) realisiert ist, wo-mit die Pfeifneigung bei akustischer Rückkopplung verringert wird.

9. Verfahren nach Anspruch 8,
dadurch gekennzeichnet,
daß anstelle einer Frequenzversatzeinrichtung (FE) eine Einrichtung (AE) zur Unterdrückung akustischer Echos vorgesehen sein kann, welche sich an die äußeren akustischen Verhältnisse automatisch anpaßt.

## Claims

1. Method for speech-controlled attenuation regulation in telephone transmission circuits, especially for free-speaking devices, wherein the speech frequency band is split up into several partial frequency bands and in each frequency band there is influenced, in dependence on the signal of one transmission direction, the signal of the opposite direction, in that for each frequency band adjustable attenuation members coupled into the other signal path are caused to change their attenuation value by control signals, and wherein the partial frequency bands are recombined after the attenuation regulation, characterised thereby that the partial frequency bands (TF1 to TFn) are formed by a respective analysing filter bank (APF1, APF2) provided for each transmission direction (E1-S1, E2-S2), that own attenuation members (DG 1.1 to DG 1.n, DG 2.1 to DG 2.n) are provided in each transmission direction (E1-S1, E2-S2) for each partial frequency band (TF1 to TFn) and so receive their adjusting commands each time from a level balance (PW1 or PWn) controlled by an associated speech evaluating logic arrangement (SA1 to SAn) that the attenuation member (DG) associated with the transmission direction less active in the respective partial frequency band (TF1 to TFn) receives a greater attenuation, that there is provided for each transmission direction (E1 - S1, E2-S2) a respective synthesising filter bank (SPF1, SPF2), by which the individual partial frequency bands (TF1-TFn) are recombined into an entire speech frequency which appears each time at the transmitter outputs (S1, S2), that the static noise is newly ascertained each time in the speech pauses by an estimation of the noise output, and that this result is used for the next speech section for level evaluation.

2. Method according to claim 1, characterised thereby, that for the adjusting of the level balances (PW1 to PWn) the activity of both transmission directions is additionally ascertained, in that it is established in which transmission direction more speech-active partial frequency bands (TF1 to TFn) are present, and that in dependence therein the attenuation of the respective other transmission direction is increased in its entirety, thus in all partial bands.

3. Method according to claim 1, characterised thereby, that in the case of establishing the speech activity of individual or several partial frequency bands (TF1 to TFn) an additional influence is exerted on one or several of the partial frequency bands (TF1 to TFn) of the other transmission direction, in that the adjusting of the attenuation members (DG) is varied in order to increase speech clarity and stability.

4. Method according to claim 1, characterised thereby, that an integrated signal processor is used as control equipment (SE), wherein the functions of the attenuation members (DG), the level balance (PW), the speech evaluating logic arrangement (SAL) and the filter banks (APF, SPF) are realised on a digital basis.

5. Method according to claim 1, characterised thereby, that an echo suppression circuit (ES) is connected between the two transmission directions in order to compensate for a mismatching of branch connection and/or line.

6. Method according to claim 1, characterised thereby, that an adjustable amplifier (V), which is controlled by a level setter (PS), is additionally provided for a level matching.

7. Method according to one of claims 5 and 6, characterised thereby, that the echo suppression circuit (ES) and the level setter (PS) are additionally realised in the control equipment (SE).

8. Method according to claim 1, characterised thereby that a frequency mixing device (FE), by which the whistling tendency in the case of acoustic feedback is reduced, is realised within the control equipment (SE) additionally in the receiving direction.

9. Method according to claim 8, characterised thereby that a device (AE) for the suppression of acoustic echo, which automatically adapts to the external acoustic conditions, can be provided instead of a frequency mixing device (FE).

**Revendications**

1. Procédé de réglage, par commande vocale, de l'affaiblissement dans des circuits de transmission téléphonique, en particulier pour des dispositifs de conversation mains libres, dans lequel la bande de fréquences vocales est divisée en plusieurs bandes de fréquences partielles et dans chaque bande de fréquences le signal d'un dispositif de transmission influence le signal cheminant en sens inverse, dans lequel, par bande de fréquences, des réseaux d'affaiblissement réglables insérés dans les autres chemins de signaux sont autorisés par des signaux de commande à modifier leur valeur d'affaiblissement, et dans lequel les bandes de fréquences partielles sont recombinées ensemble après le réglage d'affaiblissement, caractérisé en ce que les bandes de fréquences partielles (TF1 à TFn) sont réalisées par un jeu de filtres d'analyse (APF1, APF2) prévus pour chaque sens de transmission (E1-S1, E2-22), en ce que des réseaux d'affaiblissement propres (DG1.1 à DG1.n, DG2.1 à DG2.n) sont prévus dans chaque sens de transmission (E1-S1, E2-S2) pour chaque bande de fréquences partielles (TF1 à TFn), lesquels réseaux d'affaiblissement reçoivent chacun leurs ordres de réglage d'un équilibreur de niveau (PW1 à PWn) commandé par une logique d'évaluation de parole associé de manière que le réseau d'affaiblissement (DG) associé au sens de transmission peu actif dans chaque bande de fréquences partielles (TF1 à TFn) reçoive un affaiblissement plus important, en ce que pour chaque sens de transmission (E1-S1, E2-S2) est prévu un jeu de filtres de synthèse (SPF1, SPF2) au moyen desquels les bandes de fréquences partielles (TF1-TFn) individuelles se trouvent recombinées en une bande de fréquences vocales commune qui apparaît chaque fois aux sorties émission (S1, S2), en ce que, pendant les pauses de parole le bruit pondéré est à nouveau retrouvé par une estimation de la puissance de parasites et en ce que le résultat est utilisé pour l'évaluation de niveau pour la période de parole suivante.

2. Procédé selon la revendication 1, caractérisé en ce que pour le réglage des équilibreurs de niveau (PW1, PWn) est utilisée l'activité des deux sens de transmission de manière à établir dans quel sens de transmission se produisent des bandes de fréquences partielles plus actives, et en ce que l'affaiblissement de l'autre sens de transmission est élevé ensemble dans toutes les bandes partielles.

3. Procédé selon la revendication 1, caractérisé en ce que, lors de la fixation de l'activité de la parole dans une ou plusieurs bandes de fréquences partielles (TF1-TFn), une influence additionnelle est exercée sur une ou plusieurs des bandes de fréquences partielles (TF1-TFn) dans l'autre sens de transmission, laquelle influence consiste à varier le réglage du réseau d'affaiblissement (DG) afin d'augmenter l'intelligibilité et la stabilité de la parole.

4. Procédé selon la revendication 1, caractérisé en ce qu'un processeur de signal intégré est utilisé comme dispositif de commande (SE), dans lequel processeur sont réalisées les fonctions des réseaux d'affaiblissement (DG), des équilibreurs de niveau (PW), de la logique d'évaluation de la parole (SAL) et des jeux de filtres (APF, SPF) sur base numérique.

5. Procédé selon la revendication 1, caractérisé en ce qu'entre les deux sens de transmission est connecté un circuit suppresseur d'écho (ES) de manière à compenser une désadaptation du séparateur et/ou de la ligne.

6. Procédé selon la revendication 1, caractérisé en ce qu'un amplificateur réglable (V) est prévu pour une adaptation du niveau, ledit amplificateur étant commandé par un régulateur de niveau (PS).

7. Procédé selon la revendication 5 ou 6, caractérisé en ce que le circuit suppresseur d'écho (ES) et le régulateur de niveau (PS) sont réalisés dans le dispositif de commande (SE).

8. Procédé selon la revendication 1 caractérisé en ce qu'au sein du dispositif de commande (SE) est réalisé un dispositif de déplacement de fréquence (FE) par lequel la tendance au sifflement lors d'un rétrocouplage acoustique se trouve réduite.

9. Procédé selon la revendication 8, caractérisé en ce qu'à la place d'un dispositif de déplacement de fréquence (FE) est prévu un dispositif (AE) pour la suppression des échos acoustiques, lequel dispositif s'adapte automatiquement au comportement acoustique extérieur.

Fig. 1

Fig. 2